# EUROPEAN PATENT APPLICATION

(11) **EP 4 411 920 A1**
(43) Date of publication of application: **07.08.2024**
(21) Application number: 22875535.1
(22) Date of filing: 08.07.2022
(51) Int. Cl.: H01M 10/0562, C01B 25/14, H01B 1/06, H01B 1/10, H01B 13/00, H01M 4/62

(54) **SULFIDE-BASED SOLID ELECTROLYTE POWDER AND METHOD FOR PRODUCING SAME**

(30) Priority: 30.09.2021 JP 2021162227
(71) Applicant: AGC INC., Chiyoda-ku, Tokyo 1008405 (JP)
(72) Inventor: FUJII, Naoki, Tokyo 100-8405 (JP); HOMMA, Osamu, Tokyo 100-8405 (JP); MAEDA, Naoki, Tokyo 100-8405 (JP)
(74) Representative: Müller-Boré & Partner Patentanwälte PartG mbB
(86) International application number: PCT/JP2022/027094
(87) International publication number: WO 2023/053657

(57) **Abstract**

The present invention relates to a sulfide-based solid electrolyte powder which contains at least one of a crystal phase and an amorphous phase each containing Li, P and S, has a ¹H-NMR intensity of 0.3 or more wherein the intensity is determined by measuring adamantane as an external standard and then standardized under specified conditions, satisfies the relationship represented by the formula: 2 ≦ ((BET specific surface area)×(¹H-NMR intensity)), and is used in a lithium ion secondary battery.

## Description

### TECHNICAL FIELD

The present invention relates to a sulfide solid electrolyte powder to be use for a lithium-ion secondary battery and a method for producing the sulfide solid electrolyte powder.

### BACKGROUND ART

Lithium-ion secondary batteries are widely used for a portable electronic device such as a mobile phone and a notebook computer.

In the related art, a liquid electrolyte has been used in a lithium-ion secondary battery, but there is a concern of liquid leakage, ignition, and the like, and it has been necessary to increase the size of a case for safety design. The lithium-ion secondary batteries have also been desired to be improved in terms of short battery life and narrow operating temperature range.

On the other hand, attention has been paid to an all-solid-state lithium-ion secondary battery in which a solid electrolyte is used as an electrolyte of a lithium-ion secondary battery, from the viewpoint of improving safety, charging and discharging at a high speed, and reducing the size of a case.

The solid electrolytes are roughly classified into sulfide solid electrolytes and oxide solid electrolytes. Sulfide ions constituting the sulfide solid electrolytes have higher polarizability and higher lithium ion conductivity than those of oxide ions constituting the oxide solid electrolytes. As the sulfide solid electrolytes, LGPS crystals such as Li₁₀GeP₂S₁₂, argyrodite crystals such as Li₆PS₅Cl, LPS crystallized glass such as Li₇P₃S₁₁ crystallized glass, and the like have been known.

When a sulfide solid electrolyte powder, which becomes the sulfide solid electrolyte, is used for forming a cell as a lithium-ion secondary battery, a wet method is often used. Specifically, the sulfide solid electrolyte powder is dispersed in a dispersion medium to form a slurry, formed into a sheet by sheet coating, and sintered to form a sulfide solid electrolyte layer.

The sulfide solid electrolyte is easily dissolved in a polar solvent containing water or alcohol. Therefore, when the sulfide solid electrolyte powder is formed into a sheet, it is difficult to use the polar solvent as the dispersion medium.

On the other hand, in Patent Literature 1, pulverizing is performed with high energy and solid electrolyte particles are atomized such that an average particle diameter of the solid electrolyte particles is 1.5 µm or less and particle diameters of 90% or more of the particles are 2.5 µm or less, and thus dispersibility is increased so that a slurry state can be maintained for a certain period of time.

### CITATION LIST

### PATENT LITERATURE

Patent Literature 1: JP2009-211950A

### SUMMARY OF INVENTION

### TECHNICAL PROBLEM

However, if the solid electrolyte particles are made finer than necessary, primary particles tend to aggregate, which tends to cause unevenness when mixed with an active material to form a positive or negative electrode composite layer. Further, lithium ion conductivity tends to be lower due to performance degradation of a particle surface. In addition, productivity also decreases.

Furthermore, the dispersibility when a non-aqueous organic solvent is used in the dispersion medium is still low, and the sulfide solid electrolyte powders do not mix in the first place, or aggregate and precipitate.

Therefore, an object of the present invention is to provide a sulfide solid electrolyte powder having high dispersibility in a non-aqueous organic solvent and a method for producing the sulfide solid electrolyte powder.

### SOLUTION TO PROBLEM

As a result of intensive studies, the present inventors have found that the above problems can be solved by using a layer rich in hydroxy groups (-OH) as a surface layer of the sulfide solid electrolyte powder, and have completed the present invention.

That is, the present invention relates to the following [1] to [9].
[1] A sulfide solid electrolyte powder to be used for a lithium-ion secondary battery, the sulfide solid electrolyte powder including:
   at least one of a crystal phase including Li, P, and S, and an amorphous phase including Li, P, and S, in which
   a ¹H-NMR intensity is 0.3 or more,
   a BET specific surface area (m²/g) and the ¹H-NMR intensity satisfy a relationship of 2 ≤ (BET specific surface area × ¹H-NMR intensity), and
   the ¹H-NMR intensity is normalized under the following conditions:
      measurement is made using adamantane as an external standard, and a chemical shift position having a highest intensity in an obtained ¹H-NMR spectrum is normalized to 1.91 ppm; a sample is prepared by adding and mixing 2 mass% of adamantane as an internal standard to the sulfide solid electrolyte powder; and in a ¹H-NMR spectrum of the sample obtained under conditions of a probe: a probe for 2.5 mm solid, a measurement condition: a single pulse method, a pulse width: 2.0 µs, an observation center: 8.0 ppm, an observation width: 40 ppm, a relaxation delay: 5 sec, a cumulative number: 64, and a rotation speed: 20 kHz, when an intensity of a peak derived from adamantane that is the internal standard and observed at 1.91 ppm is set to 1.7, an intensity of a peak observed in a range of 1.0 ± 0.2 ppm is normalized assuming that the ¹H-NMR intensity is 1.0.
[2] The sulfide solid electrolyte powder according to the [1], in which a particle diameter D₅₀ is 3 µm or less.
[3] The sulfide solid electrolyte powder according to the [1] or the [2], in which the BET specific surface area (m²/g) and the ¹H-NMR intensity further satisfy a relationship of (BET specific surface area x ¹H-NMR intensity) ≤ 33.
[4] The sulfide solid electrolyte powder according to any one of the [1] to the [3], in which a content P (5 nm) of P in a depth of 5 nm from an outermost surface, a content P (50 nm) of P in a depth of 50 nm from the outermost surface, and a content P (100 nm) of P in a depth of 100 nm from the outermost surface satisfy relationships of {P (5 nm)/P (100 nm)} = 0.4 to 0.9 and {P (5 nm)/P (50 nm)} = 0.4 to 0.95.
[5] The sulfide solid electrolyte powder according to any one of the [1] to the [4], in which a crystal structure of the crystal phase or the amorphous phase has a PS₄³⁻ tetrahedral structure.
[6] The sulfide solid electrolyte powder according to any one of the [1] to the [5], in which at the least one of the crystal phase and the amorphous phase further contains Ha, and the Ha is at least one element selected from the group consisting of F, Cl, Br, and I.
[7] The sulfide solid electrolyte powder according to any one of the [1] to the [6], in which a crystal structure of the crystal phase includes an argyrodite structure.
[8] A method for producing a sulfide solid electrolyte powder to be used for a lithium-ion secondary battery, the method including, in order:
   obtaining a sulfide solid electrolyte including at least one of a crystal phase including Li, P, and S, and an amorphous phase including Li, P, and S;
   pulverizing the sulfide solid electrolyte to obtain a powder; and
   heating and drying the powder, in which
   the pulverizing is performed using a non-aqueous organic solvent,
   a concentration of moisture contained in the non-aqueous organic solvent is more than 5 ppm and 200 ppm or less, and
   a moisture concentration in a heating space in the heating and drying is more than 5 ppm and 300 ppm or less.
[9] The method for producing a sulfide solid electrolyte powder according to the [8], in which the heating and drying is performed in two or more stages including a first heating and drying, and a second heating and drying after the first heating and drying,
   a temperature in the first heating and drying is lower than a temperature in the second heating and drying, and
   a time for performing the first heating and drying is longer than a time for performing the second heating and drying.

### ADVANTAGEOUS EFFECTS OF INVENTION

According to the sulfide solid electrolyte powder of the present invention, dispersibility in a non-aqueous organic solvent is improved. Therefore, when the sulfide solid electrolyte powder is used for forming a cell as a lithium-ion secondary battery, a homogeneous sulfide solid electrolyte layer can be formed. Further, even when a composite material layer of a sulfide solid electrolyte and an active material is formed, a homogeneously dispersed composite material layer can be formed. As a result, even battery performance can be achieved. These characteristics are very useful as a solid electrolyte for a lithium-ion secondary battery, and it is expected to improve battery characteristics of the lithium-ion secondary battery.

### BRIEF DESCRIPTION OF DRAWINGS

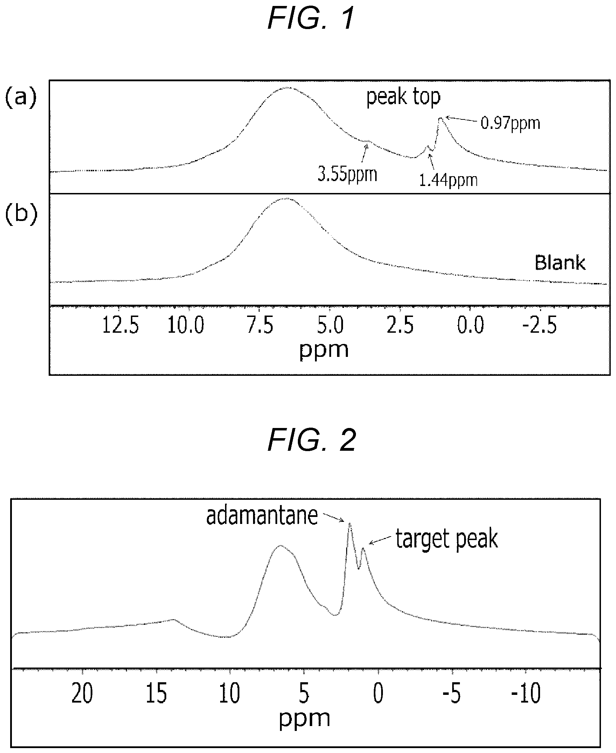

[FIG. 1] FIG. 1 is a diagram of illustrating a method for obtaining ¹H-NMR intensity in the present embodiment, in which (a) shows a ¹H-NMR spectrum measured by filling a sample tube with only a sulfide solid electrolyte powder in Example 2 without using an internal standard as a measurement sample, and (b) shows a ¹H-NMR spectrum obtained by measuring only the sample tube.
[FIG. 2] FIG. 2 is a diagram of illustrating a method for obtaining ¹H-NMR intensity in the present embodiment, and is a ¹H-NMR spectrum measured by filling a sample tube with a sulfide solid electrolyte powder in Example 2 to which adamantane as the internal standard is added as a measurement sample.

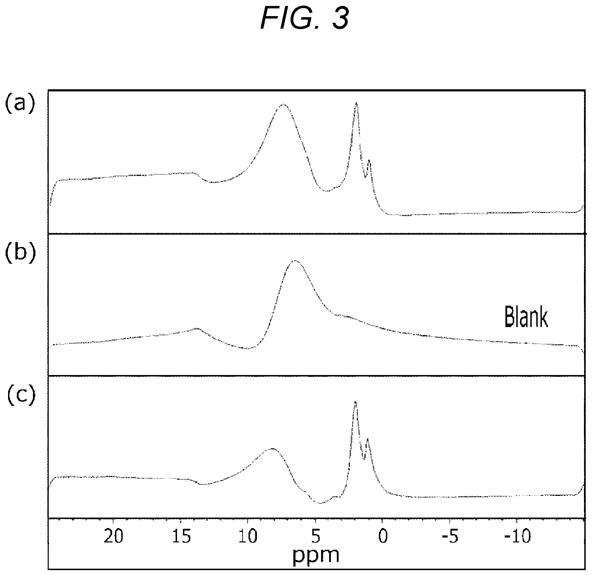

[FIG. 3] FIG. 3 is a diagram of illustrating a method for obtaining ¹H-NMR intensity in the present embodiment, in which (a) shows a ¹H-NMR spectrum after performing phase correction on the ¹H-NMR spectrum measured by filling the sample tube with the sulfide solid electrolyte powder in Example 2 to which adamantane is added as the internal standard, (b) shows a ¹H-NMR spectrum obtained by measuring only the sample tube, and (c) shows a difference spectrum between (a) and (b).

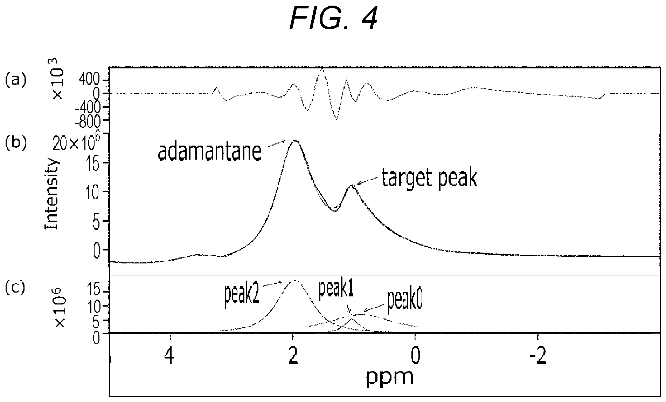

[FIG. 4] FIG. 4 is a diagram of illustrating a method for obtaining ¹H-NMR intensity in the present embodiment, in which (a) shows a curve obtained by subtracting a curve fitted using a Voigt function described in (b) for a range of -2 ppm to 3 ppm of the difference spectrum in (c), (b) shows superimposition of the curves fitted using the Voigt function for the range of -2 ppm to 3 ppm of the difference spectrum in (c), and (c) shows a diagram obtained by performing peak separation on the curve in (b) using analysis software.

### DESCRIPTION OF EMBODIMENTS

Hereinafter, the present invention will be described in detail, but the present invention is not limited to the following embodiment, and can be freely modified and implemented without departing from the gist of the present invention. In addition, the symbol "-" or the word "to" that is used to express a numerical range includes the numerical values before and after the symbol or the word as the upper limit value and the lower limit value of the range, respectively.

A non-aqueous organic solvent in this specification means a non-aqueous liquid medium in which a sulfide solid electrolyte powder is dispersed instead of a non-aqueous medium in which the sulfide solid electrolyte powder is dissolved.

### <Sulfide Solid Electrolyte Powder>

The sulfide solid electrolyte powder according to the present embodiment (hereinafter, may be simply referred to as a "solid electrolyte powder") is used in a lithium-ion secondary battery, and contains at least one of a crystal phase and an amorphous phase which contain Li, P, and S.

A ¹H-NMR intensity of the solid electrolyte powder normalized under the following conditions is 0.3 or more, and a BET specific surface area (m²/g) and the ¹H-NMR intensity satisfy a relationship of 2 ≤ (BET specific surface area × ¹H-NMR intensity). Accordingly, dispersibility in the non-aqueous organic solvent is very high.

### (Conditions)

Measurement is made using adamantane as an external standard, and a chemical shift position having the highest intensity in an obtained ¹H-NMR spectrum is normalized to 1.91 ppm. A sample is prepared by adding and mixing 2 mass% of adamantane as an internal standard to the sulfide solid electrolyte powder. In a ¹H-NMR spectrum of the sample obtained under conditions of a probe: a probe for 2.5 mm solid, a measurement condition: a single pulse method, a pulse width: 2.0 µs, an observation center: 8.0 ppm, an observation width: 40 ppm, a relaxation delay: 5 sec, a cumulative number: 64, and a rotation speed: 20 kHz, when an intensity of a peak derived from adamantane that is the internal standard and observed at 1.91 ppm is set to 1.7, an intensity of a peak observed in a range of 1.0 ± 0.2 ppm is normalized assuming that the ¹H-NMR intensity is 1.0.

A method for obtaining ¹H-NMR intensity normalized under the above conditions will be described in more detail with reference to FIGS. 1 to 4. All of these are data actually measured using a sulfide solid electrolyte powder in Example 2, which will be described later. Further, conditions for measuring ¹H-NMR spectrum are as follows.

Probe: probe for 2.5 mm solid, measurement condition: single pulse method, pulse width: 2.0 µs, observation center: 8.0 ppm, observation width: 40 ppm, relaxation delay: 5 sec, cumulative number: 64, rotation speed: 20 kHz

The sign (a) of FIG. 1 shows a ¹H-NMR spectrum of a measurement sample obtained by filling a sample tube with only a sulfide solid electrolyte powder without using the internal standard. As the sample tube, a zirconia sample tube (thin-walled zirconia rotor, manufactured by Bruker Corporation) having a diameter of 2.5 mm was used. In this case, three peaks having peak tops at 0.97 ppm, 1.44 ppm, and 3.55 ppm were observed. Further, (b) of FIG. 1 shows a ¹H-NMR spectrum of only the zirconia sample tube to be filled with the sulfide solid electrolyte powder. From this, it can be seen that a large peak observed around 6.5 ppm is a peak originating from the sample tube.

Next, ¹H-NMR measurement was performed using adamantane (manufactured by Tokyo Chemical Industry Co., Ltd., purity: more than 99.0%) as the external standard, and the chemical shift position having the highest intensity in the obtained ¹H-NMR spectrum was normalized to 1.91 ppm.

Next, 2.0 mass% of adamantane as the internal standard was added to the sulfide solid electrolyte powder, the mixture was mixed thoroughly in a mortar, and then placed into a zirconia sample tube to prepare a sample. Before the addition, adamantane is heated at 150°C for 2 hours in an atmosphere with a dew point of -55°C to remove adsorbed water. The ¹H-NMR spectrum of this sample is shown in FIG. 2, and a peak observed around 1.91 ppm is a peak derived from adamantane as the internal standard.

The following analysis is performed using the above data. As analysis software, JEOL Delta v5.3.1 was used.

The sign (a) of FIG. 3 shows a ¹H-NMR spectrum in which a chemical shift position of a peak top derived from adamantane as the internal standard is normalized to 1.91 ppm, and phase correction is performed on the ¹H-NMR spectrum in FIG. 2. The sign (b) of FIG. 3 shows a ¹H-NMR spectrum of only the zirconia sample tube in (b) of FIG. 1. The sign (c) of FIG. 3 shows a difference spectrum obtained by taking a difference between the ¹H-NMR spectrum in (a) of FIG. 3 and the ¹H-NMR spectrum in (b) of FIG. 3. The phase correction of the spectrum in FIG. 2 is performed such that a base line of peaks in a range of -2 ppm to 3 ppm of the obtained difference spectrum is horizontal to the horizontal axis to obtain the spectrum of (a) of FIG. 3.

The analysis is performed in the range of -2 ppm to 3 ppm in the difference spectrum of (c) of FIG. 3 obtained as described above. As analysis software, IGOR Pro 6.2.20 was used.

The sign (a) of FIG. 4 shows a curve obtained by subtracting a curve fitted using a Voigt function shown in (b) of FIG. 4 for the range of -2 ppm to 3 ppm of the difference spectrum in (c) of FIG. 3. A fitting curve as shown in (b) of FIG. 4 is obtained using the Voigt function for the range of -2 ppm to 3 ppm of the difference spectrum in (c) of FIG. 3, and the obtained fitting curves are superimposed. The curve is subjected to peak separation using the analysis software.

When the peak separation is performed, as shown in (c) of FIG. 4, the curve is separated into three peaks, that is, peaks 0 to 2. Among these peaks, the peak 2 is a peak derived from adamantane as the internal standard observed at 1.91 ppm. Further, the peak 0 and the peak 1 are peaks observed in a range of 1.0 ± 0.2 ppm derived from the sulfide solid electrolyte. A ratio of area intensity represented by peak area intensity of the peak 2:peak area intensity represented by a sum of (the peak 0 + the peak 1) is 1.2:1.0 in Example 2. In the obtained ¹H-NMR spectrum, when the intensity of the peak derived from adamantane as the internal standard observed at 1.91 ppm is set to 1.7, the intensity of the peak observed in the range of 1.0 ± 0.2 ppm is normalized assuming that the ¹H-NMR intensity is 1.0, and the normalized ¹H-NMR intensity of each sample is determined.

For simplicity, it is also possible to compare ¹H-NMR intensity values without using the internal standard. When the measurement is performed using the same device in the same procedure, a value of the obtained normalized ¹H-NMR intensity does not change so much, and an error is about ± 0.2.

Further, in an analysis result in Example 2, an OH concentration obtained from the peak area intensity of the range of 1.0 ± 0.2 ppm was 2 mmol/g.

The ¹H-NMR spectrum of the solid electrolyte powder in this specification means a spectrum that has been subjected to phase correction using an external standard and an internal standard, in a method for obtaining ¹H-NMR intensity normalized as described above. Further, in the ¹H-NMR spectrum, the peak observed in the range of 1.0 ± 0.2 ppm means a peak in which a peak top falls within such a range in the phase-corrected spectrum, and the value normalized by the method described above is the ¹H-NMR intensity.

In the ¹H-NMR spectrum of the solid electrolyte powder according to the present embodiment, two peaks are observed in the range of 0 ppm to 2 ppm, and both of these peaks are thought to be derived from an H atom of a hydroxy group (-OH). This hydroxyl group is obtained by hydroxylating P atoms present in a surface layer of the solid electrolyte powder, and it is considered that modification of the surface layer improves the dispersibility in the non-aqueous organic solvent. Although it is not possible to identify what kind of environmental differences the two peaks reflect, at this time, a peak observed in the range of 1.0 ± 0.2 ppm, which have high peak intensity, will be a target peak for normalization and the like.

In order to increase accuracy of the above assignment in the ¹H-NMR spectrum, the solid electrolyte powder was measured and verified using infrared spectroscopy (IR). A Nujol mull method was used as an analytical method for the IR measurement.

As a result, in the solid electrolyte powder having a peak in the range of 1.0 ± 0.2 ppm in the ¹H-NMR spectrum, absorption derived from a P-O bond was also observed in the IR measurement. Further, the higher the intensity of the peak observed in the range of 1.0 ± 0.2 ppm in the ¹H-NMR spectrum of the solid electrolyte powder, the greater the absorption derived from the P-O bond in the IR measurement.

From this, it can be said that the peak observed in the range of 1.0 ± 0.2 ppm in the ¹H-NMR spectrum of the solid electrolyte powder is a result of hydroxylation of the P atom present in the solid electrolyte powder.

In the IR measurement using the Nujol mull method, absorption derived from a PO-H bond and absorption derived from Nujol overlap with each other, and the absorption derived from the PO-H bond could not be extracted from the difference spectrum. However, the fact that the surface layer of the solid electrolyte powder is modified to form the P-O bond can be considered to be equivalent to the formation of the P-OH bond.

In the ¹H-NMR spectrum of the solid electrolyte powder according to the present embodiment, when the ¹H-NMR intensity normalized under the above conditions is 0.3 or more, it can be said that the surface layer of the solid electrolyte powder has been sufficiently modified by the introduction of the P-OH bond to improve the dispersibility thereof in the non-aqueous organic solvent.

The normalized ¹H-NMR intensity is preferably 0.5 to 5.0, more preferably 0.7 to 3.3, and still more preferably 1.0 to 2.5. Here, the normalized ¹H-NMR intensity is preferably 0.5 or more, more preferably 0.7 or more, and still more preferably 1.0 or more, from the viewpoint of increasing the dispersibility. From the viewpoint of obtaining high lithium ion conductivity, the normalized ¹H-NMR intensity is preferably 5.0 or less, more preferably 3.3 or less, and still more preferably 2.5 or less.

In the ¹H-NMR spectrum of the solid electrolyte powder according to the present embodiment, a peak observed in a range of 3.6 ± 0.4 ppm is also considered to be a peak derived from an OH bond. In this range, a peak derived from M-OH is generally observed. Here, M means a cationic element having a valence of 3 to 5.

The dispersibility of the solid electrolyte powder in the non-aqueous organic solvent also contributes to a specific surface area of the solid electrolyte powder. In the present specification, the BET specific surface area is used as the specific surface area of the solid electrolyte powder.

The BET specific surface area is determined as a surface area per unit weight from the monomolecular layer adsorption amount obtained by applying a BET equation called a BET method using an adsorption isotherm obtained by adsorption and desorption measurement of a gas such as nitrogen.

The solid electrolyte powder according to the present embodiment can be said to have sufficiently high dispersibility in the non-aqueous organic solvent if a product (BET specific surface area (m²/g) x ¹H-NMR intensity) of the normalized ¹H-NMR intensity and the BET specific surface area is 2 or more.

A value represented by (BET specific surface area x ¹H-NMR intensity) is preferably 3 to 33, more preferably 5 to 30, and still more preferably 7 to 27. Here, the value is preferably 3 or more, more preferably 5 or more, and still more preferably 7 or more, from the viewpoint of further increasing the dispersibility. From the viewpoint of obtaining high lithium ion conductivity, the value represented by (BET specific surface area x ¹H-NMR intensity) is preferably 33 or less, more preferably 30 or less, and still more preferably 27 or less.

The BET specific surface area of the solid electrolyte powder according to the present embodiment is preferably 3 m²/g to 30 m²/g, more preferably 5 m²/g to 20 m²/g, and still more preferably 7 m²/g to 15 m²/g. Here, the BET specific surface area is preferably 3 m²/g or more, more preferably 5 m²/g or more, and still more preferably 7 m²/g or more from the viewpoint of increasing the dispersibility. From the viewpoint of obtaining high lithium ion conductivity, the BET specific surface area is preferably 30 m²/g or less, more preferably 20 m²/g or less, and still more preferably 15 m²/g or less.

A particle diameter D₅₀ of the solid electrolyte powder according to the present embodiment is preferably 0.1 µm to 5 µm, more preferably 0.1 µm to 3 µm, and still more preferably 0.1 µm to 1 µm. Here, the particle diameter D₅₀ is preferably 5 µm or less, more preferably 3 µm or less, and still more preferably 1 µm or less, from the viewpoint of obtaining good lithium ion conductivity when the lithium-ion secondary battery is manufactured. Further, a lower limit of the particle diameter D₅₀ is not particularly limited, but is usually 0.1 µm or more.

In the present specification, the particle diameter D₅₀ is a value at which 50% by volume of particles have a particle diameter equal to or less than this value when measured with a particle size analyzer using a laser diffraction method.

In a process of manufacturing the solid electrolyte powder, when an attempt is made to introduce a high concentration of hydroxyl groups only to an outermost surface of the solid electrolyte powder, P atoms to which the hydroxyl groups are bonded easily escape from the surface of the solid electrolyte powder by dissolving in water or the like. Thus, the hydroxy groups are not introduced into the surface layer of the solid electrolyte powder, and only a hydrated layer tends to be formed, making it difficult to obtain the good dispersibility.

A degree to which the P atoms escape from the surface of the solid electrolyte powder is determined by X-ray photoelectron spectroscopy (XPS). Specifically, when a content of P at a depth of 5 nm from the outermost surface of the solid electrolyte powder is P (5 nm) and a content of P at a depth of 100 nm from the outermost surface is P (100 nm), the degree is obtained by a ratio represented by {P (5 nm)/P (100 nm)}.

In the present embodiment, the ratio represented by {P (5 nm)/P (100 nm)} is preferably 0.1 to 0.9, more preferably 0.5 to 0.85, and still more preferably 0.6 to 0.80. Here, the ratio is preferably 0.4 or more, more preferably 0.5 or more, and still more preferably 0.6 or more from the viewpoint of reducing the escape of the P atoms. Further, the ratio represented by {P (5 nm)/P (100 nm)} is preferably 0.9 or less, more preferably 0.85 or less, and still more preferably 0.80 or less, from the viewpoint of relatively decreasing a proportion of P as OH of the surface layer increases.

In the present embodiment, it is preferable that the surface layer of the solid electrolyte powder modified by the hydroxy group have a certain thickness. Specifically, by using the P (5 nm) and a content P (50 nm) of P in a depth of 50 nm from the outermost surface of the solid electrolyte powder, it is possible to define a preferred state of the modified surface layer by the ratio represented by {P (5 nm)/P (50 nm)} or {P (50 nm)/P (100 nm)}.

In the present embodiment, the ratio represented by {P (5 nm)/P (50 nm)} is preferably 0.4 to 0.95, more preferably 0.5 to 0.90, and still more preferably 0.6 to 0.85. Here, the ratio is preferably 0.4 or more, more preferably 0.5 or more, and still more preferably 0.6 or more from the viewpoint of reducing the escape of the P atoms. Further, the ratio represented by {P (5 nm)/P (50 nm)} is preferably 0.95 or less, more preferably 0.90 or less, and still more preferably 0.85 or less, from the viewpoint of reducing the escape of the P atoms in the surface layer and the modified surface layer having a certain thickness.

In the present embodiment, the ratio represented by {P (50 nm)/P (100 nm)} is preferably 0.7 to 0.97, more preferably 0.8 to 0.95, and still more preferably 0.8 to 0.90. Here, the ratio is preferably 0.7 or more, more preferably 0.8 or more, and further preferably 0.97 or less, more preferably 0.95 or less, and still more preferably 0.90 or less, from the viewpoint of reducing the escape of the P atoms of the surface layer and the modified surface layer having a certain thickness.

Among the ratio represented by {P (5 nm)/P (100 nm)}, the ratio represented by {P (5 nm)/P (50 nm)}, and the ratio represented by {P (50 nm)/P (100 nm)}, two or more preferably satisfy the above range, the ratio represented by {P (5 nm)/P (100 nm)} and the ratio represented by {P (5 nm)/P (50 nm)} more preferably satisfy the above range, and still more preferably all the three ratios satisfy the above range.

When the solid electrolyte powder is formed into a compacted powder body at pressure of 380 kN, the lithium ion conductivity is preferably 0.5 mS/cm or more, more preferably 1 mS/cm or more, still more preferably 2 mS/cm or more, and is preferably high.

The lithium ion conductivity in this specification is a value obtained when the measurement is performed under conditions of a measurement frequency of 100 Hz to 1 MHz, a measurement voltage of 100 mV, and a measurement temperature of 25°C using an AC impedance measuring device.

The crystal phase or the amorphous phase in the sulfide solid electrolyte powder according to the present embodiment is not particularly limited as long as the crystal phase or the amorphous phase contains Li, P, and S, and known materials can be applied. The sulfide solid electrolyte powder according to the present embodiment may include at least one of the crystal phase and the amorphous phase, or may include both.

Among them, at least one of the crystal phase and the amorphous phase preferably contains Ha in addition to Li, P, and S, from the viewpoint of easily introducing more hydroxyl groups into the surface layer of sulfide solid electrolyte powder. Ha is at least one element selected from the group consisting of F, Cl, Br, and I.

Examples of a crystal structure of the crystal phase include LGPS structures such as Li₁₀GeP₂S₁₂ and Li_{9.54}Si_{1.74}P_{1.44}S_{11.7}Cl_{0.3}, and argyrodite structures such as Li₆PS₅C and Li₆PS₅Cl_{0.5}Br_{0.5}. Examples of a glass phase include an LPS crystallized glass such as Li₇P₃S₁₁, and a crystallized glass containing a composition containing Ha in addition to Li, P, and S. The number of types of a structure of the crystal phase or the glass phase may be one or two or more.

When the crystal phase is contained, the crystal structure preferably includes an argyrodite structure from the viewpoint of symmetry of the crystal structure. A crystal having high symmetry is preferable when the powder is molded since a lithium ion conduction path spreads in three dimensions. Further, from the viewpoint of obtaining the powder by the pulverization, the crystal having high symmetry is preferred since lithium ion conductivity thereof is easily maintained.

In order to obtain the argyrodite crystal structure, the crystal phase contains Ha in addition to Li, P, and S. Ha more preferably contains at least one of Cl and Br, still more preferably contains Cl, and is yet still more preferably elemental Cl or the mixture of Cl and Br.

The argyrodite crystal can be defined as including Li, P, S, and Ha, and having peaks at positions of 2θ = 15.7 ± 0.5° and 30.2 ± 0.5° in an X-ray powder diffraction (XRD) pattern. In addition to the above peaks, the XRD pattern preferably has a peak at a position of 2θ = 18.0 ± 0.5°, and more preferably further has a peak at a position of 2θ = 25.7 ± 0.5°.

When expressed as LiₐPS_{b}Ha_{c}, the argyrodite crystal preferably satisfies relationships of 5 < a < 7, 4 < b < 6 and 0 < c < 2 since the crystal tends to become an argyrodite crystal. Such element ratios more preferably satisfy relationships of 5.1 < a < 6.3, 4 < b < 5.3, and 0.7 < c < 1.9, and still more preferably satisfy relations of 5.2 < a < 6.2, 4.1 < b < 5.2, and 0.8 < c < 1.8.

That is, the symbol a is preferably more than 5, more preferably more than 5.1, and still more preferably more than 5.2, and is preferably less than 7, more preferably less than 6.3, and still more preferably less than 6.2. The symbol b is preferably more than 4, more preferably more than 4.1, and preferably less than 6, still more preferably less than 5.3, and still more preferably less than 5.2. The symbol c is preferably more than 0, more preferably more than 0.7, and still more preferably more than 0.8, and is preferably less than 2, more preferably less than 1.9, and still more preferably less than 1.8. In this specification, the "element ratio" means a ratio of contents (at%) of elements.

In the case of the argyrodite crystal, a preferable crystal structure is, for example, a cubic crystal such as F-43m, and a hexagonal crystal, a tetragonal crystal, an orthorhombic crystal, a monoclinic crystal, or the like having reduced symmetry or a triclinic crystal or the like having further reduced symmetry may exist.

When Ha constituting the argyrodite crystal includes Cl and Br, a ratio represented by (x/y) is preferably 0.1 to 10, more preferably 0.3 to 3, and still more preferably 0.5 to 1.6, in which x (at%) is a content of Cl and y (at%) is a content of Br in the argyrodite crystal. Further, the ratio is preferably 0.1 or more, more preferably 0.3 or more, and still more preferably 0.5 or more. The ratio represented by (x/y) is preferably 10 or less, more preferably 3 or less, and still more preferably 1.6 or less.

When the ratio represented by (x/y) satisfies the above range, interactions between lithium ions and halide ions are weakened, and the lithium ion conductivity of the sulfide solid electrolyte is likely to be satisfactory. This is considered to be due to the influence of the mixed anion effect, which weakens the interaction between cations and anions by mixing bromide ions having an ionic radius larger than that of chloride ions. When the ratio represented by (x/y) satisfies the above range, cycle characteristics of the lithium-ion secondary battery are likely to be improved.

In the case where Ha contains Cl and Br, when a ratio of the contents (at%) of elements constituting the argyrodite crystal is represented by Liₐ-P-S_{b}-Cl_{c1}-Br_{c2}, c1 is preferably 0.1 to 1.5, more preferably 0.3 to 1.4, and still more preferably 0.5 to 1.3. Here, c1 is preferably 0.1 or more, more preferably 0.3 or more, and still more preferably 0.5 or more. Preferably c1 is 1.5 or less, more preferably 1.4 or less, and still more preferably 1.3 or less. Preferably c2 is 0.1 to 1.9, more preferably 0.3 to 1.6, and still more preferably 0.3 to 1.4. Here, c2 is preferably 0.1 or more, more preferably 0.3 or more, and still more preferably 0.5 or more. Preferably, c2 is 1.9 or less, more preferably 1.6 or less, and still more preferably 1.4 or less.

When c1 and c2 each satisfy the above ranges, a stable argyrodite crystal can be obtained while an abundance proportion of halide ions in the crystal is optimized and the interaction between anions and lithium ions in the crystal is reduced. Accordingly, the lithium ion conductivity of the solid electrolyte is likely to be satisfactory. When c1 and c2 satisfy the above ranges, the cycle characteristics of the lithium-ion secondary battery are likely to be improved.

Here, a, b, and (c1 + c2) preferably satisfy the same relationships as the above-described a, b, and c, respectively.

The crystallite size of crystals constituting the crystal phase is preferably small, from the viewpoint of obtaining good lithium ion conductivity in the case where the sulfide solid electrolyte powder is used to form a sulfide solid electrolyte layer to produce a battery. Specifically, the crystallite size is preferably 1000 nm or less, more preferably 500 nm or less, and still more preferably 250 nm or less. A lower limit of the crystallite size is not particularly limited, and the crystallite size is generally 5 nm or more.

The crystallite size can be calculated by using a half-width of the peak of the XRD pattern and a Scherrer equation.

In the crystal phase in the sulfide solid electrolyte powder according to the present embodiment, a counter anion is fixed in the crystal structure thereof. Further, the amorphous phase in the sulfide solid electrolyte powder can also form an anion structure in a structure thereof by adjusting a composition.

The counter anion or anion structure differs depending on a structure such as a crystal structure, and examples thereof include PS₄³⁻, P₂S₆⁴⁻, P₂S₇⁴⁻, O²⁻, S²⁻, Se²⁻, F⁻, Cl⁻, Br⁻ and I⁻.

Among these, it is preferable to include PS₄³⁻ having a tetrahedral structure from the viewpoint that an oxide anion having a Q0 structure such as SiO₄⁴⁻ easily enters this anion site, and the viewpoint of improvement in heat resistance of the crystal and a thermodynamically stable effect. Further, these structures are preferable since these structures may act to hydroxylate the surface layer of the solid electrolyte powder.

In the case where the argyrodite crystal is Li₆PS₅Cl, the counter anion constituting Li₆PS₅Cl is a PS₄³⁻tetrahedron. In addition, examples of a crystal phase in which the counter anion is a PS₄³⁻ tetrahedron include an LGPS crystal and LPS crystallized glass.

The structure of the counter anion included in the crystal phase can be determined by structural analysis performed from an XRD pattern. Further, the anion structure included in the amorphous phase can be determined by Raman spectroscopy or nuclear magnetic resonance (NMR).

The sulfide solid electrolyte powder according to the present embodiment may contain, in addition to the crystal phase or the amorphous phase containing Li, P, and S, an anion such as an oxide anion substituted at a site having the counter anion or anion structure as described above, Li₃PS₄, Li₄P₂S₆, Li₂S, LiHa (Ha is at least one halogen element selected from F, Cl, Br, and I), and the like.

The total content of elements constituting the crystal phase and the amorphous phase containing Li, P, and S in the sulfide solid electrolyte powder according to the present embodiment is preferably 60 mass% or more, more preferably 70 mass% or more, still more preferably 80 mass% or more, and yet still more preferably 90 mass% or more from the viewpoint of achieving the high lithium ion conductivity. An upper limit of the total content is not particularly limited, and may be 100 mass%. Further, in the case where two or more kinds of crystal phases and amorphous phases are present, a total of these is preferably in the above range.

The total content of the elements constituting the crystal phase and the amorphous phase containing Li, P, and S can be determined by a composition analysis using ICP emission spectrometry, atomic absorption, ion chromatography, or the like. A proportion of the crystal phase can be calculated by adding an internal standard substance, performing a measurement by XRD or neutral-beam scattering, and then comparing peak intensity with the internal standard substance.

### <Method for Producing Sulfide Solid Electrolyte Powder>

The sulfide solid electrolyte powder according to the present embodiment includes the following Steps 1 to 3.

(Step 1) A step of obtaining a sulfide solid electrolyte containing at least one of a crystal phase containing Li, P, and S, and an amorphous phase containing Li, P, and S;

(Step 2) a step of pulverizing the sulfide solid electrolyte obtained in Step 1 to obtain a powder; and

(Step 3) a step of heating and drying the powder obtained in Step 2.

The pulverizing in Step 2 is performed using the non-aqueous organic solvent, and a concentration of moisture contained in the non-aqueous organic solvent is more than 5 ppm and 200 ppm or less. Further, the moisture concentration in a heating space in the heating and drying in Step 3 is more than 5 ppm and 300 ppm or less. The moisture concentration in the present specification is a volume fraction moisture concentration, and is determined based on JIS Z 8806: 2001.

Hereinafter, Steps 1 to 3 will be described in order.

### (Step 1)

A method in a step according to the related art can be applied to the step of obtaining the sulfide solid electrolyte containing the crystal phase containing Li, P, and S.

In one embodiment, it is preferable to include a step of mixing raw materials to obtain a raw material mixture containing Li, P, and S, a step of reacting the raw material mixture, and a step of crystallization or amorphization. The reaction may be a heating reaction or a mechanochemical reaction in the step of reaction. The raw material mixture may be crystallized by heating, and in that case, a separate step of crystallization or amorphization may not be included.

In Step 1, in addition to the step of obtaining the crystal phase or the amorphous phase as described above, a step of increasing a degree of crystallinity and a step of rearranging crystals may be included.

Although the raw materials vary depending on compositions of a desired crystal phase or amorphous phase, in the case where it is desired to obtain an argyrodite crystal phase containing Ha or LPSHa crystallized glass containing Ha, a raw material containing Ha in addition to Li, P, and S is selected.

Examples of a compound containing Li include lithium compounds such as lithium sulfide (Li₂S), lithium oxide (Li₂O), lithium carbonate (Li₂CO₃), lithium hydroxide (LiOH), and lithium sulfate (Li₂SO₄), and an elemental lithium metal.

Examples of a compound containing P include phosphorus sulfides such as diphosphorus trisulfide (P₂S₃) and diphosphorus pentasulfide (P₂S₅), phosphorus compounds such as lithium phosphate (LiPO₃, Li₄P₂O₇, and Li₃PO₄) and sodium phosphate (NaPO₃, Na₄P₂O₇, and Na₃PO₄), and simple phosphorus.

Examples of a compound containing S include lithium sulfide (Li₂S), phosphorus sulfides (P₂S₃ and P₂S₅), and hydrogen sulfide (H₂S), and elemental sulfur may also be used.

Among compounds containing Ha, examples of a compound containing Cl (chlorine) include lithium chloride (LiCl), phosphorus trichloride (PCl₃), phosphorus pentachloride (PCl₅), diphosphorus tetrachloride (P₂Cl₄), phosphoryl chloride (POCl₃), sulfur dichloride (SCl₂), disulfur dichloride (S₂Cl₂), sodium chloride (NaCl), and boron trichloride (BCl₃).

Among the compounds containing Ha, examples of a compound containing Br (bromine) include lithium bromide (LiBr), phosphorus tribromide (PBr₃), phosphoryl chloride (POBr₃), disulfur dibromide (S₂Br₂), sodium bromide (NaBr), and boron tribromide (BBr₃).

Among the above, in the case where it is desired to obtain an argyrodite crystal, a combination of lithium sulfide, a phosphorus sulfide, and at least one of lithium chloride and lithium bromide is preferable. Further, even in the case other than the argyrodite crystal, when a Li-P-S-Ha composition is contained, a combination of lithium sulfide, a phosphorus sulfide, and at least one of lithium chloride and lithium bromide is preferable.

These raw materials may be very unstable in the air, may react with water and decompose, and may generate hydrogen sulfide gas or be oxidized. Therefore, the raw materials are preferably mixed in an inert atmosphere.

For mixing of the raw materials, for example, mixing using a medium, such as a planetary ball mill, and medium-less mixing such as a pin mill, a powder stirrer, and air flow mixing, can be employed. The raw materials may be made amorphous by mixing before heating.

A raw material mixture containing Li, P, S, and optionally Ha can be crystallized or amorphized by a heating reaction in which the raw material mixture is heated to melt and then cooled. Further, the raw material mixture may be crystallized or amorphized by a mechanochemical reaction, such as crystallization by heating.

In the case where the raw materials are crystallized or amorphized by heating and melting and cooling, a state of a crystal can be adjusted by changing cooling conditions such as a cooling rate and pressure during the cooling.

As the conditions for heating and melting, a known condition according to the related art can be applied. For example, a heating temperature is preferably 600°C to 900°C. A time for the heating and melting is preferably 0.1 hours to 10 hours. Pressure during the heating and melting is preferably normal pressure to slight pressure. A dew point during the heating and melting is preferably -20°C or lower, and a lower limit thereof is not particularly limited, but is usually about -80°C. Further, an oxygen concentration is preferably 1,000 ppm or less.

For example, the crystallization may be performed by rapidly cooling the heated and melted raw material mixture at a cooling rate of 1°C/sec or more under a normal pressure. After that, a heat treatment may be further performed to perform a stabilization treatment. Further, an amorphous raw material mixture may be obtained by the rapid cooling, which may be used as it is. Furthermore, the amorphous raw material mixture may be heated again to crystalize and then, used.

In the case where the raw material mixture is crystallized or amorphized by heating, as a heating condition, a condition in a step according to the related art can be applied. Examples of a heating atmosphere include an inert gas atmosphere, a hydrogen sulfide gas atmosphere, a sulfur gas atmosphere, and a vacuum sealed tube. A heating temperature is preferably 200°C or higher and lower than 600°C. The heating time is preferably 1 hour to 100 hours.

### (Step 2) Step of Pulverizing Sulfide Solid Electrolyte Obtained in Step 1 to Obtain Powder

In Step 2, the sulfide solid electrolyte is wet-pulverized using the non-aqueous organic solvent, and the concentration of moisture contained in the used non-aqueous organic solvent is set to be more than 5 ppm and 200 ppm or less. When the surface layer is hydroxylated by the moisture contained in the non-aqueous organic solvent while the sulfide solid electrolyte is finely pulverized, the hydroxylation proceeds to a certain depth, and good dispersibility can be achieved. Further, hydroxylation of an active site during the pulverization contributes to the good dispersibility.

In this way, by controlling the moisture concentration at the time of the pulverization, the ¹H-NMR spectrum of the resulting powder will show a peak in a range of 1.0 ± 0.2 ppm, or peak intensity of such a peak will become stronger.

From the viewpoint of efficiently hydroxylating the pulverized surface of the sulfide solid electrolyte, the moisture concentration of the non-aqueous organic solvent is more than 5 ppm and 200 ppm or less, preferably 10 ppm to 150 ppm, and more preferably 20 ppm to 100 ppm. Here, the moisture concentration of the non-aqueous organic solvent is more than 5 ppm, more preferably 10 ppm or more, and still more preferably 20 ppm or more. From the viewpoint of obtaining the high lithium ion conductivity, the moisture concentration of the non-aqueous organic solvent is 200 ppm or less, more preferably 150 ppm or less, and still more preferably 100 ppm or less.

Values of the content P (5 nm) of P in the depth of 5 nm from the outermost surface of the obtained sulfide solid electrolyte powder, the content P (50 nm) of P in the depth of 50 nm from the outermost surface, and the content P (100 nm) of P in the depth of 100 nm from the outermost surface can also be adjusted in Step 2 and the following Step 3.

Specifically, regarding Step 2, a moisture content of the used solvent is important relative to a specific surface area of particles desired to be obtained. When the moisture content is too small with respect to the specific surface area, there is a tendency that a hydroxy group cannot be provided so much on the surface layer. On the other hand, when the moisture content is too large with respect to the specific surface area, P tends to dissolve, making it difficult to impart the hydroxyl group to the surface layer.

Regarding Step 3, this is a particularly important step in order to obtain a hydroxylated and modified surface layer having a constant thickness. If the moisture concentration in Step 3 is too high, the lithium ion conductivity of the solid electrolyte is greatly reduced. Therefore, it is important to perform heating and drying at an appropriate moisture concentration in a temperature range in which the hydroxyl group can be diffused to some extent in the solid electrolyte.

A known method according to the related art can be applied to adjustment of the moisture concentration of the non-aqueous organic solvent. Examples thereof include a method in which a moisture absorbing and desorbing agent having a known moisture absorption and desorption amount is immersed in an organic solvent and stirred overnight, a method in which a non-aqueous organic solvent having a moisture concentration different from that of the non-aqueous organic solvent by 10 ppm or more is separately prepared and mixed for use, and a method in which a non-aqueous organic solvent is distilled to adjust the moisture concentration. Among these, it is preferable to adjust the moisture concentration by separately preparing and mixing a non-aqueous organic solvent having a moisture concentration different from that of the non-aqueous organic solvent by 10 ppm or more.

A type of the non-aqueous organic solvent is not particularly limited, and examples thereof include a hydrocarbon-based solvent, an organic solvent containing a hydroxy group, an organic solvent containing an ether group, an organic solvent containing a carbonyl group, an organic solvent containing an ester group, an organic solvent containing an amino group, an organic solvent containing a formyl group, an organic solvent containing a carboxy group, an organic solvent containing an amide group, an organic solvent containing a benzene ring, an organic solvent containing a mercapto group, an organic solvent containing a thioether group, an organic solvent containing a thioester group, an organic solvent containing a disulfide group, and a halogenated alkyl.

Examples of the hydrocarbon-based solvent include cyclohexane, heptane, octane, toluene, and dibutyl ether, from the viewpoint of a low saturated moisture concentration, cyclohexane, heptane, and octane are preferred, and from the viewpoint of adjusting the moisture concentration, it is preferable to mix the sulfide solid electrolyte with toluene, dibutyl ether, and the like.

When a pulverization area (m²) is defined as a product of a specific surface area (m²/g) of a target powder and a weight (g) of the used powder, a ratio of a moisture content (µg; product of the moisture concentration (ppm) and the amount of the used solvent (g)) in the solvent at the time of performing the wet-pulverization using the non-aqueous organic solvent to the pulverization area (m²) is preferably in a range of 0.1 to 1000, and more preferably in a range of 1 to 100. Here, the ratio is preferably 0.1 or more, more preferably 1 or more, and is preferably 1000 or less, and more preferably 100 or less.

The moisture concentration (weight concentration (ppm)) can be measured by a Karl Fischer coulometric titration method. For example, the measurement can be carried out by using a moisture measuring apparatus CA-310, manufactured by Nittoseiko Analytech Co., Ltd., coulometric titration method.

The pulverization is preferably performed such that the particle diameter D₅₀ of the obtained powder is 3 µm or less.

For example, the particle diameter D₅₀ of the powder can be adjusted by adding a solvent having a polar functional group in order to prevent aggregation during wet pulverization. Further, it is preferable to perform the pulverization such that the BET specific surface area of the obtained powder is 3 m²/g or more, and the BET specific surface area can also be adjusted by the same method as adjusting the particle diameter D₅₀.

The BET specific surface area can be measured using, for example, a highly functional specific surface area and pore size distribution measuring device ASAP-2020 manufactured by Micromeritics Instrument Corporation.

### (Step 3) Step of Heating and Drying Powder Obtained in Step 2

In Step 3, the obtained powder is heated and dried, and a moisture concentration in the heating space at that time is more than 5 ppm and 300 ppm or less, and more preferably 10 ppm to 200 ppm. Here, the moisture concentration in the heating space is more than 5 ppm, more preferably 10 ppm or more, and 300 ppm or less, and more preferably 200 ppm or less.

In the step of the heating and drying, it is considered that by setting the moisture concentration in the heating space to be more than 5 ppm and the heating temperature to be, for example, 100°C or higher, hydroxylation can be deepened from the surface to an inside of the powder, that is, the hydroxyl group can be diffused to a certain depth.

A standard heating temperature is preferably a temperature at which a diffusion constant of the hydroxy group exceeds 10⁻¹⁴ cm²/s, and more preferably a temperature at which the diffusion constant exceeds 10⁻¹² cm²/s. From the viewpoint of obtaining the high lithium ion conductivity, the moisture concentration in the heating space is 300 ppm or less.

It is important to hydroxylate the surface layer not only in Step 2 but also during the heating and drying in Step 3 in order to provide good dispersibility.

It is considered that even if only the outermost surface of the sulfide solid electrolyte powder is tried to be hydroxylated at a high concentration, the P atoms escape from the surface and the hydrated layer is only formed, making it difficult to form a layer rich in hydroxyl groups that contribute to good dispersibility. On the other hand, by going through Step 2 and Step 3 in an atmosphere in which a certain amount or more of moisture is present, it is not only the outermost surface of the sulfide solid electrolyte powder that is modified by the hydroxy group. A surface layer having a certain thickness is obtained, and thus good dispersibility can be achieved. In particular, Step 3 is an important step in order to have a constant thickness on the surface layer that is modified by the hydroxylation.

The moisture concentration in the heating space may be replaced with a dew point of the heating space. The dew point of the heating space is preferably -65°C to -30°C, more preferably -60°C to -40°C, and still more preferably -55°C to -45°C. Here, from the viewpoint of obtaining better dispersibility, the dew point of the heating space is preferably -65°C or higher, more preferably -60°C or higher, and still more preferably -55°C or higher. From the viewpoint of achieving a high lithium ion conductivity, the dew point of the heating space is preferably -30°C or lower, more preferably -40°C or lower, and still more preferably -45°C or lower.

Known methods according to the related art can be applied to the adjustment of the moisture concentration and the dew point of the heating space, for example, a dew point of an exhaust port of a heating unit is measured using a capacitance dew point meter, and the dew point can be regarded as the dew point of the heating unit. Further, in the case where a heating facility has a complicated structure, a local dew point of the heating unit can also be estimated by using a solid electrolyte having known properties such as lithium ion conductivity as an internal standard for a temperature and a dew point.

The temperature at which the heating and drying is performed is preferably 100°C to 300°C, more preferably 150°C to 300°C, and still more preferably 200°C to 300°C. Here, from the viewpoint of diffusing the hydroxy group to a certain depth, the temperature at which the heating and drying is performed is preferably 100°C or more, more preferably 150°C or more, and still more preferably 200°C or more. Further, there is no particular upper limit temperature as long as the quality can be maintained, but if the temperature is raised to about 300°C, the hydroxy group will normally diffuse sufficiently in the sulfide solid electrolyte material.

A time for heating and drying is preferably 0.1 hours to 12 hours, more preferably 0.5 hours to 8 hours, and still more preferably 1.0 hour to 6 hours. Here, from the viewpoint of diffusing the hydroxy group to a certain depth, the time for the heating and drying is preferably 0.1 hours or more, more preferably 0.5 hours or more, and still more preferably 1.0 hour or more. Further, from the viewpoint of productivity, the time for the heating and drying is preferably 12 hours or less, more preferably 8 hours or less, and still more preferably 6 hours or less.

The heating and drying are preferably performed in two or more stages including a first heating and drying, and a second heating and drying after the first heating and drying in order to increase the lithium ion conductivity. The first heating and drying is mainly aimed at drying the powder, and the second heating and drying is mainly aimed at modifying the surface layer of the powder. However, this does not exclude that the surface layer of the powder may be modified in the first heating and drying.

A heating temperature A1 in the first heating and drying is preferably lower than a heating temperature A2 in the second heating and drying. A heating time T1 in the first heating and drying is preferably longer than a heating time T2 in the second heating and drying.

The heating temperature A1 is preferably 50°C to 200°C, more preferably 90°C to 180°C, and still more preferably 120°C to 160°C. Here, from the viewpoint of drying the used solvent in a short time, the heating temperature A1 is preferably 50°C or higher, more preferably 90°C or higher, and still more preferably 120°C or higher. From the viewpoint of preventing bumping and deterioration of the used solvent, the heating temperature A1 is preferably 200°C or lower, more preferably 180°C or lower, and still more preferably 160°C or lower. Although the heating temperature A1 depends on a type of the used organic solvent, the heating temperature A1 is preferably high as long as the bumping and the deterioration can be prevented.

The heating temperature A2 is preferably 150°C to 300°C, more preferably 180°C to 280°C, and still more preferably 200°C to 250°C. Here, from the viewpoint of promoting the modification, the heating temperature A2 is preferably 150°C or higher, more preferably 180°C or higher, and still more preferably 200°C or higher. From the viewpoint of preventing the aggregation, the heating temperature A2 is preferably 300°C or lower, more preferably 280°C or lower, and still more preferably 250°C or lower.

A temperature difference represented by (A2 - A1) is preferably 50°C to 200°C, more preferably 70°C to 150°C, and still more preferably 90°C to 120°C. The temperature difference is preferably 50°C or higher, more preferably 70°C or higher, and still more preferably 90°C or higher, from the viewpoint of further remarkably improving a modification effect. Further, the temperature difference represented by (A2 - A1) is preferably 200°C or lower, more preferably 150°C or lower, and still more preferably 120°C or lower, from the viewpoint of shortening a time required for a temperature rise.

The heating time T1 is preferably 0.1 hours to 12 hours, more preferably 0.5 hours to 8 hours, and still more preferably 1.0 hour to 6 hours. Here, from the viewpoint of sufficiently drying, the heating time T1 is preferably 0.1 hours or more, more preferably 0.5 hours or more, and still more preferably 1.0 hour or more. From the viewpoint of productivity, the heating time T1 is preferably 12 hours or less, more preferably 8 hours or less, and still more preferably 6 hours or less.

The heating time T2 is preferably 0.1 hours to 5 hours, more preferably 0.5 hours to 3 hours, and still more preferably 1 hour. Here, from the viewpoint of promoting the modification, the heating time T2 is preferably 0.1 hours or more, more preferably 0.5 hours or more, and still more preferably 1.0 hour or more. From the viewpoint of productivity, the heating time T2 is preferably 5 hours or less, more preferably 3 hours or less, and still more preferably 1 hour or less.

A time difference represented by (T1 - T2) is preferably 0.1 hours to 10 hours, more preferably 0.5 hours to 8 hours, and still more preferably 1 hour to 5 hours. Here, from the viewpoint that it generally takes more time to dry a solvent having a large heat capacity, and it takes a shorter time to modify a powder surface, the time difference is preferably 0.1 hours or more, more preferably 0.5 hours or more, and still more preferably 1 hour or more, and preferably 10 hours or less, more preferably 8 hours or less, and still more preferably 5 hours or less.

Further, a total time of the heating time T1 and the heating time T2 is preferably within a range of a time of performing the heating and drying, that is, within a range of 0.1 hours to 12 hours.

In the method for adjusting the moisture concentration at the time of performing the heating and drying, from the viewpoint of stabilizing the moisture concentration, it is preferable to mix a substance with a higher moisture concentration than a desired moisture concentration and a substance with a lower moisture concentration than a desired moisture concentration, and then to introduce the mixture into the facility.

In the method for producing a sulfide solid electrolyte powder according to the present embodiment, in addition to Steps 1 to 3, other steps may be further included as long as effects of the present invention are not impaired.

The other steps include, for example, a step of performing the same modification using a material other than the moisture in Step 2, a step of performing a heat treatment additionally after Step 3, and a step of disaggregating aggregated particles after Step 3. In a step of performing a heat treatment additionally after Step 3, for example, it is preferable to perform the heat treatment in an atmosphere containing a certain amount of moisture as in Step 3. Further, in a step of disaggregating aggregated particles after Step 3, for example, it is preferable to perform crushing using ultrasonic waves or media-less crushing such as air flow crushing.

In the case where the other step(s) is included after Step 3 and a heat treatment is performed in the final step, a moisture concentration in a heating space is preferably more than 5 ppm and 300 ppm or less, and more preferably 10 ppm to 200 ppm, similarly to Step 3. Here, the moisture concentration in the heating space is preferably more than 5 ppm, and more preferably 10 ppm or more, and is preferably 300 ppm or less, and more preferably 200 ppm or less.

When the moisture concentration is replaced with the dew point, the dew point of the heating space in the final step is preferably -65°C to -30°C, more preferably -60°C to -40°C, and still more preferably -55°C to -45°C. Here, the dew point of the heating space is preferably -65°C or higher, more preferably -60°C or higher, and still more preferably -55°C or higher. From the viewpoint of achieving the high lithium ion conductivity, the dew point of the heating space is preferably -30°C or lower, more preferably -40°C or lower, and still more preferably -45°C or lower.

Further, the heat treatment in the final step may be performed in two or more stages including a first heating and drying, and a second heating and drying after the first heating and drying, as in Step 3 described above, and preferred embodiments thereof at that time are the same as the preferred embodiments of the first heating and drying and the second heating and drying in Step 3, respectively.

### <Sulfide Solid Electrolyte Layer>

The sulfide solid electrolyte powder according to the present embodiment has high dispersibility when a slurry is prepared by mixing with the non-aqueous organic solvent. In the case in which the sulfide solid electrolyte powder is used for the lithium lithium-ion secondary battery, the sulfide solid electrolyte layer is formed together with other components such as a binder as necessary, or a composite material layer for a positive or negative electrode is formed by mixing with an active material. As the binder or other components, known substances according to the related art can be used.

After the non-aqueous organic solvent of the slurry is dried, a content of the sulfide solid electrolyte powder according to the present embodiment is preferably 80 mass% or more, and more preferably 90 mass% or more, with respect to the entire sulfide solid electrolyte layer.

As a method for forming the sulfide solid electrolyte layer, a known method according to the related art can also be used. For example, the sulfide solid electrolyte layer can be formed by dispersing or dissolving the components constituting the sulfide solid electrolyte layer in a solvent to form a slurry, applying the slurry in the form of a layer (sheet), followed by drying, and then pressing the sheet as necessary. If necessary, the binder may be removed by heating. A thickness of the sulfide solid electrolyte layer can be easily adjusted by adjusting a coating amount of the slurry or the like.

When the slurry is applied in the form of the sheet, the surface layer of the sulfide solid electrolyte powder according to the present embodiment is modified with the hydroxyl group, and thus the sulfide solid electrolyte powder has excellent dispersibility when the sulfide solid electrolyte powder is dispersed in the non-aqueous organic solvent to form the slurry.

The dispersibility of the sulfide solid electrolyte powder in the non-aqueous organic solvent can be confirmed by a known method according to the related art, and is not particularly limited, but can be confirmed, for example, by the following method.

To 99 mass% of toluene, 1 mass% of MALIALIM (registered trademark) AAB-0851 (manufactured by NOF CORPORATION) is added as a dispersant, and a dispersant dissolving solvent having a moisture concentration of 20 ppm or less is prepared. To 10 mL of the dispersant dissolving solvent is added 100 mg of the solid electrolyte powder, and dispersion by an ultrasonic homogenizer is performed for 5 minutes and a mixture is allowed to stand. Thereafter, sedimentation starts, and a time until the dispersant dissolving solvent becomes transparent is measured visually. The longer the time until the dispersant dissolving solvent becomes transparent, the better the dispersibility. When the above-described dispersibility test is performed, it is preferable to perform a mesh pass with an opening of 100 µm, since accurate evaluation cannot be made if coarse particles exceeding 100 µm are mixed, for example. The opening of a used mesh can be appropriately changed.

The time until the dispersant dissolving solvent becomes transparent according to the above method is preferably 5 minutes or more, more preferably 10 minutes or more, and still more preferably 15 minutes or more, and the longer the time, the better. However, the above time is a guide and is not absolute.

If the time until the dispersant dissolving solvent becomes transparent after the surface layer of the solid electrolyte powder is modified with the hydroxy group compared to before the modification is longer, it means that such modification has improved the dispersibility in the non-aqueous organic solvent.

Since the sulfide solid electrolyte powder according to the present embodiment has excellent dispersibility in the non-aqueous organic solvent, it is preferable to form the sulfide solid electrolyte layer by applying the powder in the form of sheet, and the method for forming the sulfide solid electrolyte layer is not limited to wet molding.

That is, the sulfide solid electrolyte layer may be formed by press-molding the sulfide solid electrolyte powder and the like onto a surface of the positive electrode, the negative electrode, or the like in a dry manner. Alternatively, the sulfide solid electrolyte layer may be formed on another base material and transferred onto the surface of the positive electrode, the negative electrode, or the like. At this time, it is considered that a function of the hydroxy group is useful for preventing aggregation of the powders.

A content of the sulfide solid electrolyte according to the present embodiment with respect to the entire sulfide solid electrolyte layer is preferably 80 mass% or more, and more preferably 90 mass% or more. An upper limit of the content of the sulfide solid electrolyte is not particularly limited, and may be 100 mass%. From the viewpoint of preventing deformation, an inorganic filler and an organic filler may be mixed, and in this case, the content of the solid electrolyte is preferably 99 mass% or less.

The sulfide solid electrolyte powder may be mixed with a positive electrode active material or a negative electrode active material to be used as a positive electrode layer or a negative electrode layer. As the positive electrode active material or negative electrode active material used for the positive electrode layer or negative electrode layer, regarding a current collector, a binder, a conductive aid, and the like, known materials according to the related art can be used.

The lithium-ion secondary battery for which the sulfide solid electrolyte powder is used includes the sulfide solid electrolyte layer, the positive electrode layer, and the negative electrode layer.

As a material of an outer casing of the lithium-ion secondary battery, known materials according to the related art may also be used. As a shape of the lithium-ion secondary battery, known shapes according to the related art may be used, and examples of the shape of the lithium-ion secondary battery include a coin shape, a sheet shape (film shape), a folded shape, a wound cylindrical shape with a bottom, and a button shape. The shape thereof can be appropriately selected according to the application.

### EXAMPLES

The present invention will be specifically described below with reference to Examples, but the present invention is not limited thereto.

Examples 2 to 4, 7, 8, and 12 to 14 are inventive examples, and Examples 1, 5, 6, and 9 to 11 are comparative examples.

### (Example 1)

As Step 1, a lithium sulfide powder (manufactured by Sigma Corporation, purity: 99.98%), a phosphorus pentasulfide powder (manufactured by Sigma Corporation, purity: 99%), and a lithium chloride powder (manufactured by Sigma Corporation, purity: 99.99%) were weighed according to a composition ratio described in "Composition ratio (at%)" in Table 1 under a dry nitrogen atmosphere, followed by mixing at 400 rpm for 4 hours by using a planetary ball mill (LP-M4, manufactured by Ito Seisakusho Co., Ltd.) in the same atmosphere. Next, a mixture was vacuum-sealed in a quartz tube and heated at 450°C for 5 hours to obtain a sulfide solid electrolyte containing an argyrodite crystal. After that, pulverization was performed in a mortar, followed by a mesh path with an opening of 44 µm, to thereby obtain a powder having a specific surface area of 0.3 m²/g.

The step of performing the pulverization in Step 2 and the step of performing the heating and drying in Step 3 were not performed.

Blanks in the composition ratio in Table 1 means that no additives are added, other than unavoidable impurities contained in raw materials.

### (Example 2)

As Step 2, 2 g of the sulfide solid electrolyte obtained in Example 1 was charged with 8 g of a mixed solvent of heptane (CAS No. 142-82-5) having a moisture concentration of 30 ppm and dibutyl ether (CAS No. 142-96-1) as a non-aqueous organic solvent in a 45 ml-size zirconia sealed pot, and a zirconia ball was charged therein, followed by wet pulverization in a planetary ball mill under the conditions of 200 rpm × 45 min to obtain a powder. As Step 3, the obtained powder was heated and dried in a heating space having a dew point of -45°C (moisture concentration of 70 ppm) and a temperature of 180°C for 2 hours to obtain a sulfide solid electrolyte powder.

### (Example 3)

As Step 2, a powder was obtained under the same conditions as in Step 2 of Example 2, with respect to the sulfide solid electrolyte obtained in Example 1. As Step 3, the obtained powder was heated and dried in a heating space having a dew point of -60°C (moisture concentration of 10 ppm) and a temperature of 180°C for 2 hours to obtain a sulfide solid electrolyte powder.

### (Example 4)

A powder was obtained under the same conditions as in Step 2 of Example 2 except that a mixed solvent of heptane having a moisture concentration of 50 ppm and dibutyl ether was used as a non-aqueous organic solvent in Step 2 with respect to the sulfide solid electrolyte obtained in Example 1. As Step 3, the obtained powder was heated and dried in a heating space having a dew point of -35°C (moisture concentration of 220 ppm) and a temperature of 180°C for 2 hours, the temperature was further raised to 220°C, and the obtained powder was heated and dried for 0.5 hours to obtain a sulfide solid electrolyte powder.

### (Example 5)

The sulfide solid electrolyte obtained in Example 1 was not pulverized as Step 2, and a solid electrolyte powder was aged by leaving the solid electrolyte powder in a room temperature environment having a dew point of - 30°C for 2 hours to obtain a sulfide solid electrolyte without performing the subsequent Step 3.

### (Example 6)

As Step 1, a lithium sulfide powder (manufactured by Sigma Corporation, purity: 99.98%), a phosphorus pentasulfide powder (manufactured by Sigma Corporation, purity: 99%), a lithium chloride powder (manufactured by Sigma Corporation, purity: 99.99%), and a lithium bromide powder (manufactured by Sigma Corporation, purity: 99.995%) were weighed according to a composition ratio shown in Table 1 in a dry nitrogen atmosphere, followed by mixing at 400 rpm for 4 hours by using a planetary ball mill in the same atmosphere. Next, a mixture was vacuum-sealed in a quartz tube and heated at 450°C for 5 hours to obtain a sulfide solid electrolyte containing an argyrodite crystal. After that, pulverization was performed in a mortar, followed by a mesh path with an opening of 44 µm, to thereby obtain a powder having a specific surface area of 0.2 m²/g.

The step of performing the pulverization in Step 2 and the step of performing the heating and drying in Step 3 were not performed.

### (Example 7)

A powder was obtained under the same conditions as in Step 2 of Example 2 except that a mixed solvent of heptane having a moisture concentration of 20 ppm and dibutyl ether was used as a non-aqueous organic solvent as Step 2 with respect to the sulfide solid electrolyte obtained in Example 6. As Step 3, the obtained powder was heated and dried in a heating space having a dew point of -60°C (moisture concentration of 10 ppm) and a temperature of 180°C for 2 hours, the temperature was further raised to 220°C, and the obtained powder was heated for 0.5 hours to obtain a sulfide solid electrolyte powder.

### (Example 8)

A sulfide solid electrolyte powder was obtained in the same manner as in Example 7 except that the moisture concentration of the mixed solvent of heptane and dibutyl ether, which is the non-aqueous organic solvent, was set to 50 ppm in Step 2, and the dew point in Step 3 was set to -50°C (moisture concentration of 40 ppm) with respect to the sulfide solid electrolyte in Example 6.

### (Example 9)

The sulfide solid electrolyte powder obtained in Example 7 was further annealed at a dew point of -70°C (moisture concentration of 2 ppm) and 400°C for 1 hour.

### (Example 10)

A powder was obtained under the same conditions as in Step 2 of Example 2 except that a mixed solvent of heptane having a moisture concentration of 5 ppm and dibutyl ether was used as a non-aqueous organic solvent as Step 2 with respect to the sulfide solid electrolyte obtained in Example 6. As Step 3, the obtained powder was heated and dried in a heating space having a dew point of -65°C (moisture concentration of 5 ppm) and a temperature of 180°C for 2 hours to obtain a sulfide solid electrolyte powder.

### (Example 11)

As Step 1, a lithium sulfide powder (manufactured by Sigma Corporation, purity: 99.98%) and a phosphorus pentasulfide powder (manufactured by Sigma Corporation, purity: 99%) were weighed according to a composition ratio shown in Table 1 in a dry nitrogen atmosphere, followed by mixing at 400 rpm for 24 hours by using a planetary ball mill in the same atmosphere. Next, a mixture was vacuum-sealed in a quartz tube and heated at 280°C for 1 hour to obtain a sulfide solid electrolyte containing Li₇P₃S₁₁ crystal. After that, pulverization was performed in a mortar, followed by a mesh path with an opening of 44 µm, to thereby obtain a powder having a specific surface area of 2.4 m²/g.

The step of performing the pulverization in Step 2 and the step of performing the heating and drying in Step 3 were not performed.

### (Example 12)

A powder was obtained under the same conditions as in Step 2 of Example 2 except that a mixed solvent of heptane having a moisture concentration of 10 ppm and dibutyl ether was used as a non-aqueous organic solvent as Step 2 with respect to the sulfide solid electrolyte obtained in Example 11. As Step 3, the obtained powder was heated and dried in a heating space having a dew point of -60°C (moisture concentration of 10 ppm) and a temperature of 180°C for 2 hours, the temperature was further raised to 240°C, and the obtained powder was heated for 0.5 hours to obtain a sulfide solid electrolyte powder.

### (Example 13)

A sulfide solid electrolyte powder was obtained in the same manner as in Example 12 except that the moisture concentration of the mixed solvent of heptane and dibutyl ether, which is the non-aqueous organic solvent, was set to 30 ppm as Step 2, and the dew point in Step 3 was set to -50°C (moisture concentration of 40 ppm) with respect to the sulfide solid electrolyte in Example 11.

### (Example 14)

As Step 1, a lithium sulfide powder (manufactured by Sigma Corporation, purity: 99.98%), a phosphorus pentasulfide powder (manufactured by Sigma Corporation, purity: 99%), and a lithium chloride powder (manufactured by Sigma Corporation, purity: 99.99%) were weighed according to a composition ratio shown in Table 1 in a dry nitrogen atmosphere, a mixture was vacuum-sealed in a quartz tube, and the mixture was heated at 750°C for 1 hour and rapidly cooled to obtain a sulfide solid electrolyte as glass (amorphous).

Next, a sulfide solid electrolyte powder was obtained in the same manner as in Example 12 except that the moisture concentration of the mixed solvent of heptane and dibutyl ether, which is the non-aqueous organic solvent, was set to 25 ppm as Step 2, and the dew point in Step 3 was set to -50°C (moisture concentration of 40 ppm).

**Table 1**

| | Composition ratio (at%) | | | | | Crystal structure | Step 2 | | Step 3 | | Adding |
|---|---|---|---|---|---|---|---|---|---|---|---|
| | Li | P | S | Cl | Br | | Wet pulverization | Moisture concentration | Dew point | Moisture concentration | |
| Example 1 | 5.30 | 0.95 | 4.23 | 1.60 | 0.00 | Argyrodite (only Clbased) | No | - | - | - | - |
| Example 2 | | | | | | | Yes | 30 ppm | -45°C | 70 ppm | - |
| Example 3 | | | | | | | Yes | 30 ppm | -60°C | 10 ppm | - |
| Example 4 | | | | | | | Yes | 50 ppm | -35°C | 220 ppm | - |
| Example 5 | | | | | | | No | Dew point of - 30°C (only aging) | - | - | - |
| Example 6 | 5.30 | 0.95 | 4.23 | 0.80 | 0.80 | Argyrodite (Cl- and Brbased) | No | - | - | - | - |
| Example 7 | | | | | | | Yes | 20 ppm | -60°C | 10 ppm | - |
| Example 8 | | | | | | | Yes | 50 ppm | -50°C | 40 ppm | - |
| Example 9 | | | | | | | Yes | 20 ppm | -60°C | 10 ppm | Annealing (dew point of -70°C) |
| Example 10 | | | | | | | Yes | 5 ppm | -65°C | 5 ppm | - |
| Example 11 | 7.0 | 3.0 | 11.0 | | | Li₇P₃S₁₁ | No | - | - | - | - |
| Example 12 | | | | | | | Yes | 10 ppm | -60°C | 10 ppm | - |
| Example 13 | | | | | | | Yes | 30 ppm | -50°C | 40 ppm | - |
| Example 14 | 6.0 | 1.0 | 5.0 | 1.00 | | Li-P-S-Cl glass | Yes | 25 ppm | -50°C | 40 ppm | - |

### [Evaluation]

### (Dispersibility)

To 99 mass% of toluene, 1 mass% of MALIALIM (registered trademark) AAB-0851 (manufactured by NOF CORPORATION) was added as a dispersant, and a dispersant dissolving solvent having a moisture concentration of 20 ppm or less was prepared. To 10 mL of the dispersant dissolving solvent, 100 mg of the sulfide solid electrolyte or sulfide solid electrolyte powder obtained in each of Examples 1 to 14 was added, and dispersion by an ultrasonic homogenizer was performed for 5 minutes and a mixture was allowed to stand. Thereafter, sedimentation started, and a time until the dispersant dissolving solvent became transparent was measured visually, and an evaluation was performed according to the following criteria. Results are shown in "Dispersibility" in Table 2.
A: The time until the dispersant dissolving solvent becomes transparent is 15 minutes or more.
B: The time until the dispersant dissolving solvent becomes transparent is 5 minutes or more and less than 15 minutes.
C: The time until the dispersant dissolving solvent becomes transparent is 1 minute or more and less than 5 minutes.
D: The time until the dispersant dissolving solvent becomes transparent is less than 1 minute.

### (Particle Diameter D₅₀)

The particle diameter D₅₀ of the sulfide solid electrolyte or sulfide solid electrolyte powder obtained in each of Examples 1 to 14 was measured using a particle size analyzer(manufactured by Microtrac, laser diffraction particle size distribution meter MT3300EXII) using a laser diffraction method. Results are shown in "D₅₀ (µm)" in Table 2.

### (BET Specific Surface Area)

The sulfide solid electrolyte or sulfide solid electrolyte powder obtained in each of Examples 1 to 14 was measured by a multipoint krypton adsorption BET method using a specific surface area and pore size distribution measuring device (pore size distribution measuring device ASAP-2020, manufactured by Micromeritics Instrument Corporation) to determine a specific surface area. The sulfide solid electrolyte powder did not come into contact with the atmosphere from sampling to measurement.

Specifically, as a pretreatment, pressure was reduced at room temperature for 12 hours or more. A sample weight was 0.15 g, and at an analysis temperature of -196°C, measurements were performed at five or more points in a relative pressure (P/P0) range of 0.1 to 0.25, and BET plots were created. The specific surface area was calculated from the obtained plots.

Results are shown in "BET specific surface area (m²/g)" in Table 2.

### (¹H-NMR)

To 0.5g of the sulfide solid electrolyte or sulfide solid electrolyte powder obtained in each of Examples 1 to 14, 2 mass% of adamantane (manufactured by Tokyo Chemical Industry Co., Ltd., purity: 99.0%) was added as the internal standard, followed by thorough mixing in a mortar, the mixture was placed into a zirconia sample tube (thin-walled zirconia rotor, manufactured by Bruker Corporation) having a diameter of 2.5 mm to prepare a sample, which was used for measurement. At this time, by performing the work inside a glove box, the sulfide solid electrolyte or sulfide solid electrolyte powder was prevented from coming into contact with air. Further, the added adamantane was heated at 150°C for 2 hours in an atmosphere with a dew point of -55°C to remove adsorbed water before the addition.

Using a nuclear magnetic resonance apparatus (AVANCE 400, manufactured by Bruker Corporation), ¹H-NMR spectra of various species were measured with ¹H.

First, the measurement was made using a zirconia sample tube (thin-walled zirconia rotor, manufactured by Bruker Corporation) filled with adamantane (Tokyo Chemical Industry Co., Ltd., purity: greater than 99.0%) as the external standard, and the chemical shift position having the highest intensity in the obtained ¹H-NMR spectrum was normalized to 1.91 ppm. The measurement conditions were as follows: a probe: a probe for 2.5 mm solid, a measurement condition: a single pulse method, a pulse width: 2.0 µs, an observation center: 8.0 ppm, an observation width: 40 ppm, a relaxation delay: 5 sec, a cumulative number: 64, a rotation speed: 20 kHz.

Next, a ¹H-NMR spectrum of the prepared sample described above was measured under the same conditions as described above to obtain the ¹H-NMR spectrum as shown in FIG. 2. Here, the peak observed around 1.91 ppm is a peak derived from adamantane, which is the internal standard. Next, the phase was corrected such that the chemical shift position of the top of the peak derived from adamantane, which is the internal standard, was 1.91 ppm, and the ¹H-NMR spectrum subjected to the phase correction as shown in (a) of FIG. 3 was obtained. From the ¹H-NMR spectrum subjected to this phase correction, the difference was taken using the spectrum of the zirconia sample tube as shown in (b) of FIG. 3 to obtain the difference spectrum as shown in (c) of FIG. 3. The analysis software used for the series of analyses is JEOL Delta v5.3.1. In the difference spectrum which are thus obtained, a range of -2 ppm to 3 ppm was subjected to the following analysis.

In the next analysis, as shown in (a) of FIG. 4, a curve was obtained by subtracting a curve fitted using a Voigt function shown in (b) of FIG. 4 for the range of -2 ppm to 3 ppm of the difference spectrum shown in (c) of FIG. 3. A fitting curve as shown in (b) of FIG. 4 was obtained using the Voigt function for the range of -2 ppm to 3 ppm of the difference spectrum in (c) of FIG. 3, and the obtained fitting curves were superimposed. The curve was subjected to peak separation using an analysis software. In this case, IGOR Pro 6.2.20 was used as the analysis software.

When the peak separation was performed, as shown in (c) of FIG. 4, the curve was separated into three peaks, that is, peaks 0 to 2. Among these peaks, the peak 2 is a peak derived from adamantane, which is the internal standard, observed at 1.91 ppm. Further, the peak 0 and the peak 1 are peaks observed in a range of 1.0 ± 0.2 ppm derived from the sulfide solid electrolyte.

A ratio of area intensity represented by peak area intensity of the peak 2:area intensity represented by the sum of (the peak 0 + the peak 1) was 1.2: 1.0. In the obtained ¹H-NMR spectrum, when the intensity of the peak derived from adamantane as the internal standard observed at 1.91 ppm was set to 1.7, the intensity of the peak observed in the range of 1.0 ± 0.2 ppm was normalized assuming that the ¹H-NMR intensity was 1.0, and the normalized ¹H-NMR intensity of each sample was determined.

The result of ¹H-NMR intensity normalized by the above is shown in "¹H-NMR" in Table 2.

Further, the product of the BET specific surface area (m²/g) and the normalized ¹H-NMR intensity obtained above is shown in "BET × NMR" in Table 2.

### (Content of P in Depth Direction)

The sulfide solid electrolyte or sulfide solid electrolyte powder obtained in each of Examples 1 to 14 was measured using an X-ray photoelectron spectrometer (XPS, manufactured by ULVAC-PHI, Inc., ESCA5500) and using a transfer vessel under the following conditions.

Pass energy: 93.9 eV, step energy: 0.8 eV, analysis area: 800 µm in diameter, detection angle: 45° with respect to sample surface, X-ray source: Al ray, monochrome 14 kV, 300 W, sputtering type: C₆₀ ion, and sputtering rate: 0.74 nm/min (in terms of thermal oxide film SiO₂)

Sputtering depths of 5 nm, 50 nm, and 100 nm in terms of the SiO₂ film were determined, and compositions at those positions were analyzed.

A content P (5 nm) of P in a depth of 5 nm from the outermost surface, a content P (50 nm) of P in a depth of 50 nm from the outermost surface, and a content P (100 nm) of P in a depth of 100 nm from the outermost surface were obtained. Further, a ratio represented by {P (5 nm)/P (100 nm)} and a ratio represented by {P (5 nm)/P (50 nm)} were also calculated.

Results are shown in "P (5 nm)", "P (50 nm)", "P (100 nm)", "P (5 nm)/P (100 nm)", and "P (5 nm)/P (50 nm)" in Table 2. In the table, a portion represented by "-" means that no measurement was performed.

### (Lithium Ion Conductivity)

The sulfide solid electrolyte or sulfide solid electrolyte powder obtained in each of Examples 1 to 14 was formed into a compacted powder body under pressure of 380 kN, the compacted powder body was used as a measurement sample, and the lithium ion conductivity was measured by using an AC impedance measuring device (potentiostat/galvanostat VSP, manufactured by Bio-Logic Sciences Instruments). The measurement conditions were as follows: a measurement frequency of 100 Hz to 1 MHz, a measurement voltage of 100 mV, and a measurement temperature of 25°C. Results are shown in "σ25 (mS/cm)" in Table 2. When a value of the lithium ion conductivity is 0.1 mS/cm or more, it can be said that as the electrolyte to be used for the lithium-ion secondary battery, the value is good.

### (Infrared Spectroscopy (IR))

For the sulfide solid electrolyte or sulfide solid electrolyte powder in each of Examples 1 to 4, a peak derived from the P-O bond was observed using an infrared spectrometer (IR, Nicolet 6700, manufactured by Thermo Fisher Scientific Inc.). Specifically, 4 mg to 5 mg of the sulfide solid electrolyte or sulfide solid electrolyte powder pulverized using a mortar and pestle was placed on a BaF₂ window plate, and 50 mg to 60 mg of liquid paraffine (manufactured by FUJIFILM Wako Pure Chemical Corporation) was dropped thereon. Next, a mixture was uniformly dispersed and formed into a thin film having a diameter of about 1 cm. A second BaF₂ window plate was placed thereon, and a gap between the two BaF₂ window plates was sealed with polytetrafluoroethylene (PTFE). All of these operations were performed in a glove box in which a dew point was maintained at -70°C or lower to minimize exposure of the sulfide solid electrolyte or sulfide solid electrolyte powder to the atmosphere. The cell prepared by the above operations was subjected to the infrared spectrometry.

As a result, in Example 1, no absorption derived from the P-O bond was observed, whereas in each of Examples 2 to 4, the absorption derived from the P-O bond was observed at 900 cm⁻¹ to 1250 cm⁻¹. Each absorption intensity was correlated with the intensity of the peak observed in the range of 1.0 ± 0.2 ppm in the ¹H-NMR spectrum.

### (Composition Analysis)

The composition ratio of each example in Table 1 was a charged composition ratio, but a composition analysis of the sulfide solid electrolyte or sulfide solid electrolyte powder was actually performed using the method to be described below, and it was found that an actual composition ratio approximately matched a value of the charged composition ratio. The expression "approximately matched" means that a difference from the charged composition ratio was within ±5%.

The sulfide solid electrolyte or sulfide solid electrolyte powder weighed in the glove box was dissolved in an alkali aqueous solution. Then, P and S were subjected to the ICP emission spectrometry (apparatus: model number PS3520UV DDII, manufactured by Hitachi High-Tech Science Corporation). Li was analyzed by the atomic absorption (apparatus: model ZA3300 manufactured by Hitachi High-Tech Corporation). CsCl was added such that a solution concentration was 0.1%. Cl and Br were analyzed by the ion chromatography (apparatus: model number ICS-2100 manufactured by Thermo Fisher Scientific Inc). At this time, the measurement was performed using a column AS11HC by adding a small amount of H₂O₂ and diluting with ultrapure water.

**Table 2**

| | Evaluation result | | | | | | | | | | |
|---|---|---|---|---|---|---|---|---|---|---|---|
| | Dispersibility | D₅₀ (µm) | BET specific surface area (m²/g) | ¹H-NMR | BET × NMR | P(5 nm) | P(50 nm) | P(100 nm) | P(5 nm)/P(100 nm) | P(5 nm)/P(50 nm) | σ25 (mS/cm) |
| Example 1 | D | - | 0.3 | 0.0 | 0.0 | - | - | - | - | - | 6.3 |
| Example 2 | A | 0.9 | 7.5 | 2.0 | 15.0 | - | - | - | - | - | 2.4 |
| Example 3 | B | 0.9 | 7.2 | 1.1 | 7.9 | - | - | - | - | - | 3.3 |
| Example 4 | A | 0.7 | 10.2 | 3.4 | 34.7 | - | - | - | - | - | 0.7 |
| Example 5 | D | - | 0.4 | 1.3 | 0.5 | 0.13 | 0.93 | 1.00 | 0.13 | 0.14 | 1.5 |
| Example 6 | D | - | 0.2 | 0.0 | 0.0 | 0.92 | 0.92 | 1.00 | 0.92 | 1.00 | 11.5 |
| Example 7 | B | 1.0 | 7.2 | 1.3 | 9.4 | 0.83 | 0.88 | 1.00 | 0.83 | 0.94 | 6.1 |
| Example 8 | A | 0.9 | 9.5 | 1.8 | 17.1 | 0.81 | 0.90 | 1.00 | 0.81 | 0.90 | 5.4 |
| Example 9 | D | 1.2 | 6.4 | 0.1 | 0.6 | - | - | - | - | - | 7.7 |
| Example 10 | C | 1.0 | 7.5 | 0.2 | 1.5 | - | - | - | - | - | 6.5 |
| Example 11 | D | - | 2.4 | 0.0 | 0.0 | - | - | - | - | - | 4.3 |
| Example 12 | B | 0.7 | 9.8 | 0.7 | 6.9 | - | - | - | - | - | 1.3 |
| Example 13 | B | 0.7 | 9.4 | 0.9 | 8.5 | - | - | - | - | - | 1.1 |
| Example 14 | A | - | 9.7 | 1.2 | 11.6 | - | - | - | - | - | 1.0 |

From the above results, it was found that when the normalized ¹H-NMR intensity was 0.3 or more, and the product of the BET specific surface area (m²/g) and the normalized ¹H-NMR intensity was 2 or more, the sulfide solid electrolyte powder having high dispersibility in the non-aqueous organic solvent was obtained. It was found that when the product of the BET specific surface area (m²/g) and the normalized ¹H-NMR intensity of the sulfide solid electrolyte powder was more than 33, the lithium ion conductivity thereof was impaired. Further, it was found that only exposing the sulfide solid electrolyte to an environment with a poor dew point was not sufficient to improve the dispersibility, resulting in a decrease in lithium ion conductivity and a large amount of P elution from the surface.

The sulfide solid electrolyte powder having the high dispersibility in the non-aqueous organic solvent is obtained by wet-pulverizing the obtained solid electrolyte in the presence of a certain amount of moisture, and heating and drying the obtained solid electrolyte in the presence of a certain amount of moisture to suitably modify the surface layer.

Although the present invention has been described in detail with reference to specific embodiments, it is apparent to those skilled in the art that various changes and modifications can be made without departing from the spirit and scope of the present invention. The present application is based on a Japanese Patent Application (No. 2021-162227) filed on September 30, 2021, and the contents thereof are incorporated herein by reference.

## Claims

1. A sulfide solid electrolyte powder to be used for a lithium-ion secondary battery, the sulfide solid electrolyte powder comprising:
at least one of a crystal phase comprising Li, P, and S, and an amorphous phase comprising Li, P, and S, wherein
a ¹H-NMR intensity is 0.3 or more,
a BET specific surface area (m²/g) and the ¹H-NMR intensity satisfy a relationship of 2 ≤ (BET specific surface area × ¹H-NMR intensity), and
the ¹H-NMR intensity is normalized under the following conditions:
measurement is made using adamantane as an external standard, and a chemical shift position having a highest intensity in an obtained ¹H-NMR spectrum is normalized to 1.91 ppm; a sample is prepared by adding and mixing 2 mass% of adamantane as an internal standard to the sulfide solid electrolyte powder; and in a ¹H-NMR spectrum of the sample obtained under conditions of a probe: a probe for 2.5 mm solid, a measurement condition: a single pulse method, a pulse width: 2.0 µs, an observation center: 8.0 ppm, an observation width: 40 ppm, a relaxation delay: 5 sec, a cumulative number: 64, and a rotation speed: 20 kHz, when an intensity of a peak derived from adamantane that is the internal standard and observed at 1.91 ppm is set to 1.7, an intensity of a peak observed in a range of 1.0 ± 0.2 ppm is normalized assuming that the ¹H-NMR intensity is 1.0.

2. The sulfide solid electrolyte powder according to claim 1, wherein a particle diameter D₅₀ is 3 µm or less.

3. The sulfide solid electrolyte powder according to claim 1 or 2, wherein the BET specific surface area (m²/g) and the ¹H-NMR intensity further satisfy a relationship of (BET specific surface area x ¹H-NMR intensity) ≤ 33.

4. The sulfide solid electrolyte powder according to any one of claims 1 to 3, wherein a content P (5 nm) of P in a depth of 5 nm from an outermost surface, a content P (50 nm) of P in a depth of 50 nm from the outermost surface, and a content P (100 nm) of P in a depth of 100 nm from the outermost surface satisfy relationships of {P (5 nm)/P (100 nm)} = 0.4 to 0.9 and {P (5 nm)/P (50 nm)} = 0.4 to 0.95.

5. The sulfide solid electrolyte powder according to any one of claims 1 to 4, wherein a crystal structure of the crystal phase or the amorphous phase comprises a PS₄³⁻ tetrahedral structure.

6. The sulfide solid electrolyte powder according to any one of claims 1 to 5, wherein the at least one of the crystal phase and the amorphous phase further comprises Ha, and
the Ha is at least one element selected from the group consisting of F, Cl, Br, and I.

7. The sulfide solid electrolyte powder according to any one of claims 1 to 6, wherein a crystal structure of the crystal phase comprises an argyrodite structure.

8. A method for producing a sulfide solid electrolyte powder to be used for a lithium-ion secondary battery, the method comprising, in order:
obtaining a sulfide solid electrolyte comprising at least one of a crystal phase comprising Li, P, and S, and an amorphous phase comprising Li, P, and S;
pulverizing the sulfide solid electrolyte to obtain a powder; and
heating and drying the powder, wherein
the pulverizing is performed using a non-aqueous organic solvent,
a concentration of moisture contained in the non-aqueous organic solvent is more than 5 ppm and 200 ppm or less, and
a moisture concentration in a heating space in the heating and drying is more than 5 ppm and 300 ppm or less.

9. The method for producing a sulfide solid electrolyte powder according to claim 8, wherein the heating and drying is performed in two or more stages comprising a first heating and drying, and a second heating and drying after the first heating and drying,
a temperature in the first heating and drying is lower than a temperature in the second heating and drying, and
a time for performing the first heating and drying is longer than a time for performing the second heating and drying.
